# EUROPEAN PATENT APPLICATION

(11) **EP 2 698 889 A1**
(43) Date of publication of application: **19.02.2014**
(21) Application number: 12771232.1
(22) Date of filing: 10.02.2012
(51) Int. Cl.: H02G 3/08

(54) **JUNCTION BOX CASING**

(30) Priority: 14.04.2011 CN 201120130302 U
(71) Applicant: Yueqing Xindali Industries Co., Ltd., Zhejiang 325604 (CN); EME Ltd., 8123 Ebmatingen (CH)
(72) Inventor: LIU, Yuzhu, Yueqing Zhejiang 325604 (CN); KRUESI, Peter, CH-8123 Ebmatingen (CH)
(74) Representative: Groth & Co. KB
(86) International application number: PCT/CN2012/000164
(87) International publication number: WO 2012/139413

(57) **Abstract**

A junction box casing comprises a bottom housing (24) and an enveloping plate (25), the bottom housing comprising a base plate (241) and a side wall (242) which extends perpendicular to the base plate and is adapted to the peripheral shape of the enveloping plate, and the side wall and the enveloping plate defining an internal space, wherein the side wall is provided with two coupling holes (243, 244) which are symmetrical with respect to a longitudinal central line (4) and extend outward perpendicular to the side wall; the two coupling holes are provided, at the outer circumferential surfaces, with external threads which spin in opposite directions relative to each other; and the base plate is provided with an opening (245) which is located on the longitudinal central line and is symmetrical with respect to the longitudinal central line. The junction box casing has a simple structure and high reliability and stability.

## Description

### Field of the Utility model

The utility model relates to a junction box casing, which is particularly applicable to a junction box attached to a solar panel.

### Background of the Utility model

Currently, various junction boxes are available in the market, and most of them are used in outdoor environment in which wind and rain often occur and cold and hot weathers alternate, so the actual situation determines that the requirements on various performances of the junction boxes, such as strength and structural sealability, are very high, and it is a common phenomenon that the junction boxes actually used in the market are low in dissipating efficiency and complicated in structure, thereby often resulting in the defects of short service life, complicated cable connection and the like; thus it is clear that for optimizing the existing junction boxes, the structure of a junction box casing plays a vital role, and according to the specific requirements of customers, our company develops a junction box casing which is novel in design and reasonable in structure and adapted to be attached to the solar panel.

### Summary of the Utility model

The object of the utility model is to overcome the defects of the prior art, and provide a junction box casing with novel design, a reasonable structure, and a relatively long service life.

To achieve the above object, the utility model provides a junction box casing, which comprises a bottom housing and an enveloping plate, the bottom housing comprising a base plate and a side wall which extends perpendicular to the base plate and is adapted to the peripheral shape of the enveloping plate, and the side wall and the enveloping plate defining an internal space, wherein the side wall is provided with two coupling holes which are symmetrical with respect to a longitudinal central line and extend outward perpendicular to the side wall; the two coupling holes are provided, at the outer circumferential surfaces, with external threads which spin in opposite directions relative to each other; and the base plate is provided with an opening which is located on the longitudinal central line and is symmetrical with respect to the longitudinal central line.

Through the above improvement on the prior art, as the junction box casing, with a simplified design, only comprises the bottom housing and the enveloping plate, and the side wall of the bottom casing is provided with the coupling holes, the design with complicated structures, such as reinforcing ribs and wiring terminals, in the existing junction box is simplified to the maximal degree; moreover, as the base plate is also provided with the opening, the radiating performance of the junction box during working is optimized, and the formation of the opening also facilitates connecting an external connecting attachment of a solar panel into the junction box through the opening; in addition, as the two coupling holes are provided, at the outer circumferential surfaces, with external threads which spin in opposite directions relative to each other, the screwing directions of two couplers mounted in the coupling holes are opposite to each other, thus avoiding the phenomenon in the case of the same screwing direction that as one coupler is screwed too tight, a conductive board at the other coupler is loosened or even jumps up, thereby improving the reliability and stability of the junction box.

Preferably, an forming angle α is formed between axial central lines of the coupling holes, and the forming angle α is preferably between 75° and 125°, and the side wall is divided into an outer side wall and an inner side wall by the axial central lines forming the forming angle α; the bottom surface of the base plate is a flat surface with a sector structure, and the flat surface is provided with a plurality of pivots along its edge, and of course, it's a better preferable way that the flat surface is also provided with a region having a double sided adhesive, and the double sided adhesive region can be a concave region with respect to the flat surface as a reference, or can be a region as a certain part of the flat surface; the base plate is provided with an extending part within the angle range of the forming angle α, at a section projecting from the inner side wall, and with reinforcing ribs extending from the side wall partially along the periphery of the extending part of the base plate; the upper end face of the extending part forms a region for laser printing an unique product number or other product information; and the outer side surface of the outer side wall is connected outward with two cable receiving troughs having an inner diameter adapted to the outer diameter of the cables, and the cable receiving troughs are symmetrical with respect to the longitudinal central line.

According to the structure of the junction box casing further defined by the above preferable way, especially the cable receiving troughs symmetrical with respect to the longitudinal central line are provided on the outer side surface of the outer side wall in a way of extending outwards, as the inner diameter of the cable receiving troughs is adapted to the outer diameter of cables in size, when the junction box using the junction box casing is provided to a customer, the matched male and female cables are also externally connected to the junction box, the male and female cables can be received in the cable receiving troughs, respectively, so that the cables will not sway casually and are placed in a normalized and ordered manner suitable for packaging, not resulting in complicated packaging due to disordered winding of the cables; in addition, as the bottom surface of the base plate is configured with a flat sector structure, and the shape is especially suitable for achieving the effect that after the adhesive is sprayed around the opening of the base plate through a robot by a customer, when the junction box is screwed and pressed on the solar panel or other plate walls, adhesive liquid on the base plate of the junction box is perfectly distributed on the base plate, and is thereby fully used and not prone to fall off, thus further improving the reliability and stability, and relatively prolonging the service life.

Preferably, the bottom surface of the enveloping plate is provided with a plurality of clamping blocks projecting downward at positions close to the peripheral side, and the part of each clamping block projecting from the peripheral edge of the enveloping plate forms a clamping part; and the upper end face of the side wall is provided with a stepped groove adapted to the enveloping plate, and the stepped groove includes a stepped bottom surface and a stepped side surface, the stepped bottom surface being provided with notches adapted to the clamping blocks, and the notches extending to the stepped side surface and forming clamping groove parts on the stepped side surface, so as to enable the clamping parts of the clamping blocks to be in clamped connection with the clamping groove parts of the notches. In the preferable way, as clamping grooves on the side wall are formed inside, clamped connection between the enveloping plate and the bottom housing is achieved without affecting the appearance, and junction box can not be opened after assembly; and after a filling material is injected, the sealing performance of the junction box casing is relatively good. Of course, in practical use, it is also completely possible for the clamping blocks to be provided on the outer side surface of the side wall and for the clamping grooves to be formed on the enveloping plate in a manner of extending perpendicular to the enveloping plate, thereby achieving clamped connection; however, in such a connecting way, as the enveloping plate needs to be provided with clamping grooves, the structure of the enveloping plate is relatively complicated, and the mounting sealability of the enveloping plate and the casing is relatively poor after the filling material is injected.

Further preferably, the upper end face of the enveloping plate is provided with a nameplate region and a sucker region which are distributed longitudinally and are symmetrical with respect to the longitudinal central line, wherein the nameplate region is located at an upper place on the upper end face of the enveloping plate, and the sucker region is located below the nameplate region on the upper end face of the enveloping plate; the dimension of the nameplate region is preferably 7.8mm × 28.2mm, and the dimension of the sucker region is preferably 10mm × 30mm; on the upper end face of the enveloping plate, a "-" sign is marked at a position close to the first coupler, and a "+" sign is marked at a position close to the second coupler, so as to be adapted to abutting joint with a male and a female cable; the reason for such further definition is that the enveloping plate and a junction box body of the junction box provided to the customer are separated from each other, and need to be assembled after the junction box is tested by the customer, and in the case of the sucker region being provided on the enveloping plate, the customer can more visually and conveniently use a mechanical arm for positioning and installation, thereby improving the efficiency; and the dimension of the sucker region of 10mm × 30mm is especially suitable for positioning by the mechanical arm and is also a preferred special size for absorption by the mechanical arm, and of course, a series of improvements can also be made on the sucker region for adapting to other mechanical arms, for example, the sucker is configured with any common geometrical shape, such as being circular, elliptical or the like.

Preferably, position limiting blocks are provided at intersections between the inner side surface of the side wall and the upper end face of the base plate, and a position limiting recess is formed on the base plate close to the periphery of the opening, and a plurality of projection parts are also provided on the upper end face of the base plate; and the position limiting blocks, the position limiting groove and the projecting parts provided on the junction box casing are adapted structures designed according to the shape and structural features of the conductive board and the like, so that when the conductive board is assembled, the conductive board can be positioned and mounted simply and conveniently.

### Detailed Description of the Drawings

Fig. 1 is a stereoscopic exploded schematic view of an embodiment of the utility model.
Fig. 2 is a stereoscopic schematic view of a bottom housing in the embodiment of the utility model.
Fig. 3 is a front view of the bottom housing in the embodiment of the utility model.
Fig. 4 is a stereoscopic schematic view of an enveloping plate in the embodiment of the utility model.
Fig. 5 is a bottom view of the enveloping plate in the embodiment of the utility model.
Fig. 6 is an enlarged view at A of Fig. 2.
Fig. 7 is a stereoscopic schematic view from another perspective of the bottom housing in the embodiment of the utility model.

### Detailed Description of the Embodiments

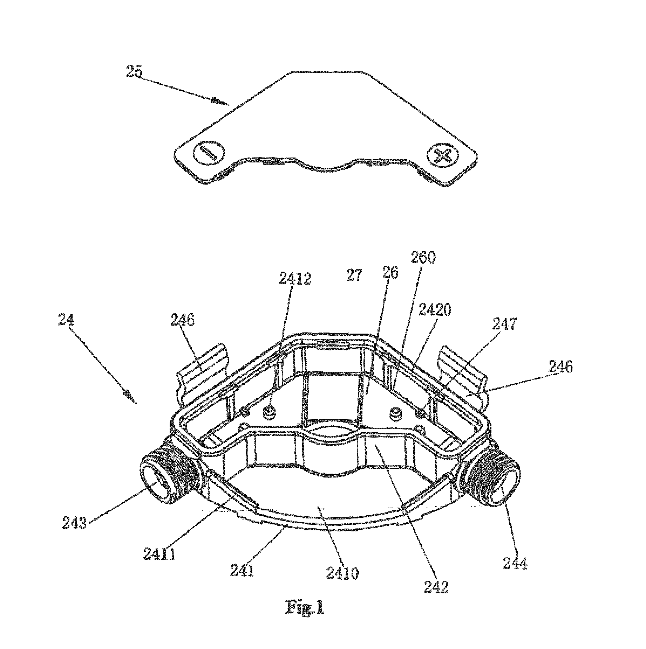

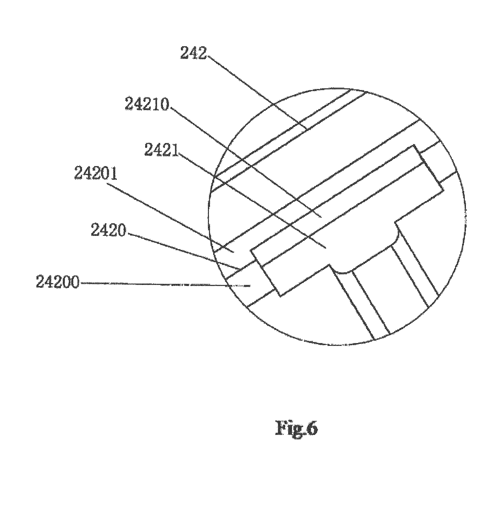

As shown in Figs. 1-7, a particular embodiment of the utility model relates to a junction box casing, which comprises a bottom housing 24 and an enveloping plate 25, the bottom housing 24 comprising a base plate 241 and a side wall 242 which extends perpendicular to the base plate 241 and is adapted to the peripheral shape of the enveloping plate 25, and the side wall 242 and the enveloping plate 25 defining an internal space, wherein the side wall 242 is provided with two coupling holes 243, 244 which are symmetrical with respect to a longitudinal central line 4 and extend outward perpendicular to the side wall 242; the two coupling holes 243, 244 are provided, at the outer circumferential surfaces, with external threads which spin in opposite directions relative to each other; and the base plate 241 is provided with an opening 245 which is located on the longitudinal central line 4 and is symmetrical with respect to the longitudinal central line 4. In the embodiment, as the junction box casing, with a simplified design, only comprises the bottom housing 24 and the enveloping plate 25, and the side wall 242 of the bottom casing 24 is provided with the coupling holes 243, 244, the design with complicated structures, such as reinforcing ribs and wiring terminals, in the existing junction box is simplified to the maximal degree; moreover, as the base plate 241 is also provided with the opening 245, the radiating performance of the junction box during working is optimized, and the formation of the opening 245 also facilitates connecting an external connecting attachment of a solar panel into the junction box through the opening 245;in addition, as the two coupling holes 243, 244 are provided, at the outer circumferential surfaces, with external threads which spin in opposite directions relative to each other, the screwing directions of two couplers mounted in the coupling holes are opposite to each other, thus avoiding the phenomenon in the case of the same screwing direction that as one coupler is screwed too tight, a conductive board at the other coupler is loosened or even jumps up, thereby improving the reliability and stability of the junction box.

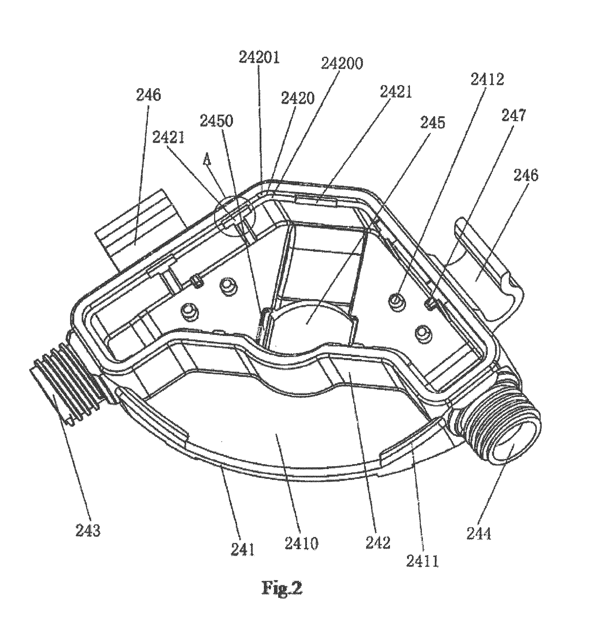

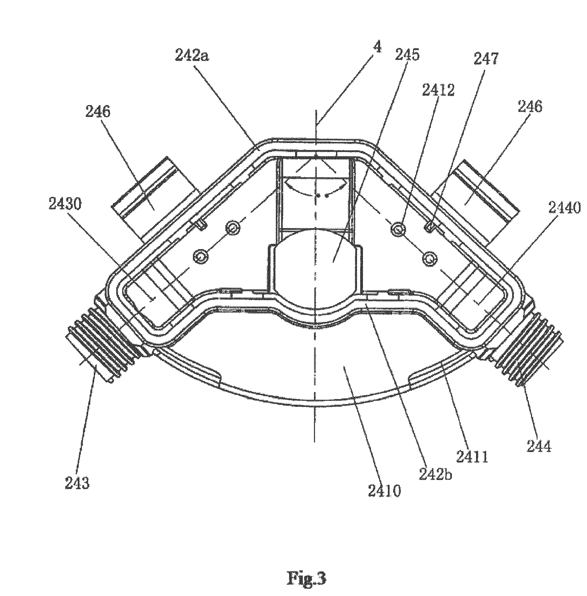

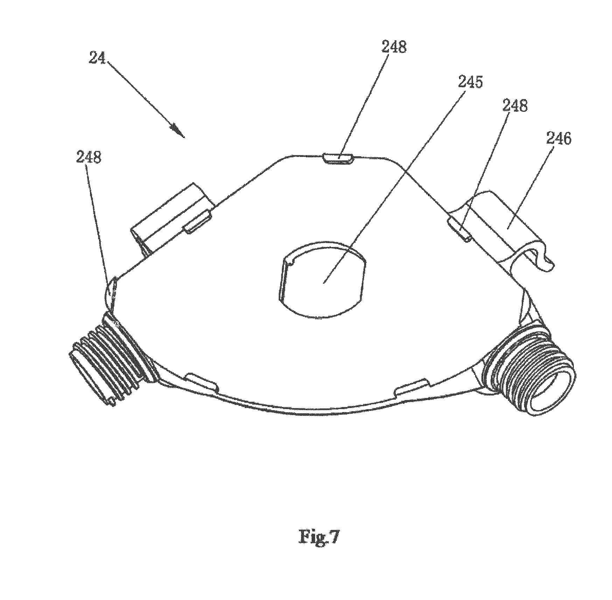

As can be seen in conjunction with Figs. 2 and 3, an forming angle α is formed between axial central lines 2430, 2440 of the coupling holes 243, 244, and the forming angle α is preferably between 75° and 125°, and the side wall is divided into an outer side wall 242a and an inner side wall 242b by the axial central lines 2430, 2440 forming the forming angle α. The bottom surface of the base plate 241 is a flat surface with a sector structure, and it can be seen from Fig. 7 that the flat surface is provided with a plurality of pivots 248 along its edge, and the pivots 248 are used for controlling the spatial distance between the bottom of the junction box and the solar panel. Of course, it's a better preferable way that the flat surface is also provided with a region having a double sided adhesive, and the double sided adhesive region can be a concave region with respect to the flat surface as a reference, or can be a region as a certain part of the flat surface. In the figures of the embodiment, the double sided adhesive region preferably has an area of 8mm × 12mm, which is not marked in the figures, and the double sided adhesive region is provided due to the fact that the junction box is fixed to the solar panel by silica gel, and in order to ensure that the junction box is secured before the silica gel on the bottom of the junction box becomes dry, the double sided adhesive provided in the double sided adhesive region plays the securing function before the silica gel is dry. The base plate 241 is provided with an extending part 2410 within the angle range of the forming angle α, at a section projecting from the inner side wall 242b, and with reinforcing ribs 2411 extending from the side wall 242 partially along the periphery of the extending part 2410 of the base plate 241; the upper end face of the extending part 2410 forms a region for laser printing an unique product number or other product information; and the outer side surface of the outer side wall 242a is connected outward with two cable receiving troughs 246 having an inner diameter adapted to the outer diameter of the cables, and the cable receiving troughs 246 are symmetrical with respect to the longitudinal central line 4.According to the structure of the junction box casing defined in the embodiment, the cable receiving troughs 246 symmetrical with respect to the longitudinal central line 4 are especially provided on the outer side surface of the outer side wall 242a in a way of extending outwards, as the inner diameter of the cable receiving troughs 246 in the embodiment is adapted to the size of the outer diameter of cables, when the junction box using the junction box casing is provided to a customer, the matched male and female cables are also externally connected to the junction box, the male and female cables can be received in the cable receiving troughs 246, respectively, so that the cables will not sway casually and are placed in a normalized and ordered manner suitable for packaging, not resulting in complicated packaging due to disordered winding of the cables; in addition, the bottom surface of the base plate 241 is configured with a flat sector structure, and the shape is especially suitable for achieving the effect that after the adhesive is sprayed around the opening 245 of the base plate through a robot by a customer, when the junction box is screwed and pressed on the solar panel or other plate walls, adhesive liquid on the base plate 241 of the junction box is perfectly distributed on the base plate 241, and is thereby fully used and not prone to fall off, thus further improving the reliability and stability, and relatively prolonging the service life.

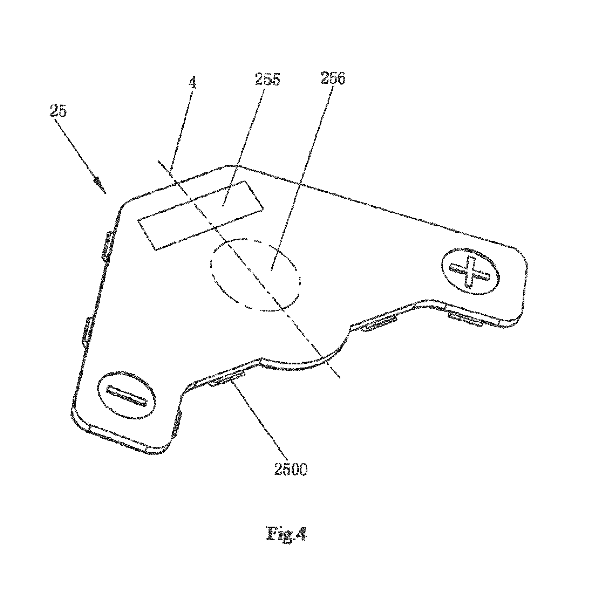

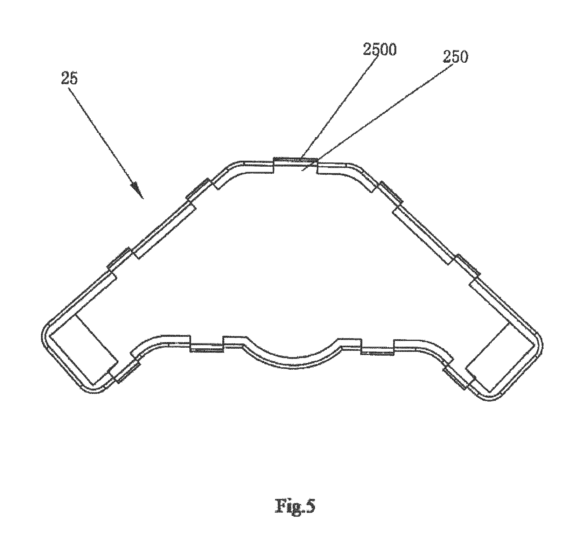

As can be seen obviously in conjunction with Figs. 1, 4, 5 and 6, the bottom surface of the enveloping plate 25 is provided with a plurality of clamping blocks 250 at positions close to the peripheral side, and it can be seen from Fig.5 of the embodiment that nine clamping blocks 250 are distributed at the peripheral side of the bottom surface of the enveloping plate 25 respectively, and the part of each clamping block 250 projecting from the peripheral edge of the enveloping plate forms a clamping part 2500; and the upper end face of the side wall 242 is provided with a stepped groove 2420 adapted to the enveloping plate 25, and the stepped groove 2420 includes a stepped bottom surface 24200 and a stepped side surface 24201, the stepped bottom surface 24200 being provided with notches 2421 adapted to the clamping blocks 250, and the notches 2421 extending to the stepped side surface 24201 and forming clamping groove parts 24210 on the stepped side surface, so as to enable the clamping parts 2500 of the clamping blocks 250 to be in clamped connection with the clamping groove parts 24210 of the notches 2421. Obviously, in the embodiment, as clamping grooves on the side wall 242 are formed inside, clamped connection between the enveloping plate 25 and the bottom housing 24 is achieved without affecting the appearance, and junction box can not be opened after assembly; and after a filling material is injected, as the enveloping plate 25 and the side wall 242 are fit and connected to each other by means of adaptation through the stepped groove 2420, the sealing performance of the junction box casing is relatively good. Of course, in practical use, it is also completely possible for the clamping blocks to be provided on the outer side surface of the side wall 242 and for the clamping grooves to be formed on the enveloping plate 25 in a manner of extending perpendicular to the enveloping plate 25, thereby achieving clamped connection; however, in such a connecting way, as the enveloping plate needs to be provided with clamping grooves, the structure of the enveloping plate is relatively complicated, and the mounting sealability of the enveloping plate and the casing is relatively poor after the filling material is injected. It can also be obviously seen from Fig. 4 the upper end face of the enveloping plate 25 is provided with a nameplate region 255 and a sucker region 256 which are distributed longitudinally and are symmetrical with respect to the longitudinal central line 4, wherein the nameplate region 255 is located at an upper place on the upper end face of the enveloping plate 25, and the sucker region 256 is located below the nameplate region 255 on the upper end face of the enveloping plate 25; the dimension of the nameplate region 255 is preferably 7. 8mm × 28. 2mm, and dimension of the sucker region 256 is preferably 10mm × 30mm; and in the embodiment it can be obviously seen the sucker region 256 can also be circular or elliptical. On the upper end face of the enveloping plate 25, a "-" sign is marked at a position close to the first coupler 22, and a "+" sign is marked at a position close to the second coupler 23, so as to be adapted to abutting joint with a male and a female cable; as the enveloping plate 25 and a junction box body of the junction box provided to the customer are separated from each other, and need to be assembled after the junction box is tested by the customer, with the sucker region 256 provided on the enveloping plate, the customer can more visually and conveniently use a mechanical arm for positioning and installation, thereby improving the efficiency; and the sucker region 256 has a dimension of 10mm × 30mm, which is especially suitable for positioning by the mechanical arm of the customer and is also a special size for absorption by the mechanical arm.

It can be seen in conjunction with Figs. 1, 2 and 3 position limiting blocks 247 are provided at intersections between the inner side surface of the side wall 242 and the upper end face of the base plate 241, and a position limiting recess 2450 is formed on the base plate 241 close to the periphery of the opening 245, and two projection parts 2412 are also provided on the upper end face of the base plate 241; and in the embodiment, the position limiting blocks 247, the position limiting groove 2450 and the projecting parts 2412 provided on the junction box casing are adapted structures designed according to the shape and structure of the conductive board, so that when the conductive board is assembled, the conductive board can be positioned and mounted simply and conveniently.

Apparently, the protection scope of the utility model is not limited to the technical solution of the embodiment only, and all obviously improvements fall into the protection scope of the utility model as long as they are derived from the spirit of the utility model.

## Claims

1. A junction box casing, comprising a bottom housing and an enveloping plate, the bottom housing comprising a base plate and a side wall which extends perpendicular to the base plate and is adapted to a peripheral shape of the enveloping plate, and the side wall and the enveloping plate defining an internal space, **characterized in that** the side wall is provided with two coupling holes which are symmetrical with respect to a longitudinal central line and extend outward perpendicular to the side wall; the two coupling holes are provided, at the outer circumferential surfaces, with external threads which spin in opposite directions relative to each other; and the base plate is provided with an opening which is located on the longitudinal central line and is symmetrical with respect to the longitudinal central line.

2. The junction box casing according to claim 1, **characterized in that**, that an forming angle α is formed between axial central lines of the coupling holes, the forming angle α is between 75° and 125°, and the side wall is divided into an outer side wall and an inner side wall by the axial central lines α forming the forming angle; the bottom surface of the base plate is a flat surface with a sector structure having a double sided adhesive region, and the flat surface is provided with a plurality of pivots along its edge; the base plate is provided with an extending part within the angle range of the forming angle α, at a section projecting from the inner side wall, and with reinforcing ribs extending from the side wall partially along the periphery of the extending part; the upper end face of the extending part forms a region for laser printing an unique product number or other product information; and the outer side surface of the outer side wall is connected outward with two cable receiving troughs having an inner diameter adapted to the outer diameter of the cables, and the cable receiving troughs are symmetrical with respect to the longitudinal central line.

3. The junction box casing according to claim 1 or 2, **characterized in that** the bottom surface of the enveloping plate is provided with a plurality of clamping blocks projecting downward at positions close to the peripheral side, and the part of each clamping block projecting from the peripheral edge of the enveloping plate forms a clamping part; and the upper end face of the side wall is provided with a stepped groove adapted to the enveloping plate, and the stepped groove includes a stepped bottom surface and a stepped side surface, the stepped bottom surface is provided with notches adapted to the clamping blocks, and the notches extends to the stepped side surface and forms clamping groove parts on the stepped side surface, so as to enable the clamping parts of the clamping blocks to be in clamped connection with the clamping groove parts of the notches.

4. The junction box casing according to claim 3, **characterized in that** the upper end face of the enveloping plate is provided with a nameplate region and a sucker region which are distributed longitudinally and are symmetrical with respect to the longitudinal central line, wherein the nameplate region is located at an upper place on the upper end face of the enveloping plate, and the sucker region is located below the nameplate region on the upper end face of the enveloping plate; the dimension of the nameplate region is preferably 7. 8mm × 28. 2mm, and the dimension of the sucker region is preferably 10mm × 30mm; and on the upper end face of the enveloping plate, a "-" sign is marked at a position close to a first coupler, and a "+" sign is marked at a position close to a second coupler.

5. The junction box casing according to claim 1 or 2, **characterized in that** position limiting blocks are provided at intersections between the inner side surface of the side wall and the upper end face of the base plate, and a position limiting recess is formed on the base plate close to the periphery of the opening, and a plurality of projection parts are also provided on the upper end face of the base plate.
